# EUROPÄISCHE PATENTANMELDUNG

(11) **EP 4 411 609 A1**
(43) Veröffentlichungstag der Anmeldung: **07.08.2024**
(21) Anmeldenummer: 24152172.3
(22) Anmeldetag: 16.01.2024
(51) Int. Cl.: G06Q 10/04, G06Q 10/063, G06Q 10/0631, G06Q 50/06

(54) **VORRICHTUNG UND SYSTEM ZUR KOHLENSTOFFDIOXID-NACHVERFOLGUNG BEI DER WASSERSTOFFERZEUGUNG**

(30) Priorität: 31.01.2023 DE 102023102225
(71) Anmelder: E.ON SE, 45131 Essen (DE); Bayernwerk Netz GmbH, 84032 Altdorf (DE); Bayernwerk Netz GmbH, 93049 Regensburg (DE); E.ON Digital Technology GmbH, 30457 Hannover (DE)
(72) Erfinder: Haghgoo, Maliheh, 80992 München (DE); Kumar, Rajkiran, 80992 München (DE); Cortiana, Giorgio, 81739 München (DE); Fecher, Florian, 80992 München (DE); Jäger, Alexander, 93049 Regensburg (DE); Milanov, Nikolai, 80992 München (DE); Musai, Fisnik, 80992 München (DE); Walther, Georg, 10117 Berlin (DE)
(74) Vertreter: Gunzelmann, Rainer

(57) **Zusammenfassung**

Es wird eine Vorrichtung zur Kohlenstoffdioxid-Nachverfolgung beschrieben. Die Vorrichtung umfasst eine erste Kommunikationsvorrichtung, die dazu eingerichtet ist, von einem Wasserstofferzeuger erste Daten betreffend eine von dem Wasserstofferzeuger erzeugte Wasserstoffmenge und eine für die Erzeugung der Wasserstoffmenge eingesetzte erste elektrische Energiemenge zu empfangen, eine erste Verarbeitungsvorrichtung, die dazu eingerichtet ist, zweite Daten betreffend eine emittierte Kohlenstoffdioxidmenge, die einem Verbrauch einer zweiten elektrischen Energiemenge am Ort des Wasserstofferzeugers zugeordnet ist, zu erlangen, wobei die erste Verarbeitungsvorrichtung ferner dazu eingerichtet ist, basierend auf den ersten Daten und den zweiten Daten der von dem Wasserstofferzeuger erzeugten Wasserstoffmenge eine Kohlenstoffdioxidemissionsmenge zuzuordnen, ein vertrauenswürdiges Plattformmodul, das dazu eingerichtet ist, die der erzeugten Wasserstoffmenge zugeordnete Kohlenstoffdioxidemissionsmenge zu verschlüsseln und zu zertifizieren, und eine zweite Kommunikationsvorrichtung, die dazu eingerichtet ist, die verschlüsselten und zertifizierten Daten zu senden.

## Beschreibung

### TECHNISCHES GEBIET

Die vorliegende Offenbarung betrifft eine Vorrichtung zur Kohlenstoffdioxid-Nachverfolgung, ein System zur Kohlenstoffdioxid-Nachverfolgung, ein System zur Kohlenstoffdioxidemissionszertifizierung und ein System zur Wasserstoffzertifizierung bei der Wasserstofferzeugung.

### HINTERGRUND

In der Zukunft soll vermehrt sogenannter "grünen Wasserstoff" erzeugt werden. Grüner Wasserstoff ist Wasserstoff, der aus erneuerbaren Energiequellen wie Sonnenenergie oder Windenergie gewonnen wird. Es kann durch Elektrolyse von Wasser erzeugt werden, bei der Wasser in seine Bestandteile Wasserstoff und Sauerstoff zerlegt wird. Der dabei entstehende Wasserstoff ist sauberer und umweltfreundlicher als Wasserstoff, der aus fossilen Brennstoffen gewonnen wird, da keine schädlichen Emissionen wie Kohlenstoffdioxid entstehen.

Es ist aber oft schwierig nachzuvollziehen, ob es sich tatsächlich um grünen Wasserstoff handelt, insbesondere da die von einem Elektrolyseur aus einem elektrischen Versorgungsnetz bezogene elektrische Energie meist einen Energiemix umfasst, der von erneuerbaren Energiequellen, fossilen Brennstoffen und nuklearen Brennstoffen erzeugt wurde. Wird ein solcher Energiemix zur Erzeugung von Wasserstoff verwendet, so kann nicht genau bestimmt werden, welche Menge an Kohlenstoffdioxid für die Erzeugung des Wasserstoffs emittiert wird. Problematisch für eine Nachverfolgung der Kohlenstoffdioxidemission bei der Wasserstofferzeugung ist dabei insbesondere, dass die Energieerzeugung an einem von der Wasserstofferzeugung weit entfernten Ort stattfinden kann. Um sich auf der Grundlage des derzeitigen Zertifizierungsrahmens als grün zu zertifizieren, muss der Elektrolyseur seinen Verbrauch durch den Kauf von "Guarantees of Origin" (GOs) ausgleichen (1 GO entspricht 1 MWh Strom). In der Tat sieht das GO-System in der Bilanz gut aus, spiegelt aber nicht die Realität des Netzes wider. Im Grunde genommen müssen im derzeitigen Rahmen Zeit und Ort nicht übereinstimmen, was eine bilanzielle Verfolgung des Kohlenstoffs anstelle einer physischen Verfolgung ermöglichen kann.

"Guarantee of Origin" (GO) ist ein Zertifizierungssystem, das von der Europäischen Union (EU) ins Leben gerufen wurde, um den Ursprung von Strom aus erneuerbaren Energiequellen nachzuverfolgen. Es dient als Nachweis dafür, dass eine bestimmte Menge Strom aus einer bestimmten erneuerbaren Energiequelle wie Wind, Solar, Hydro oder Biogas erzeugt wurde. Die GO wird von den nationalen Regulierungsbehörden der EU-Mitgliedstaaten ausgestellt und basiert auf der EU-Richtlinie für erneuerbare Energien. Das GO-Zertifikat enthält Informationen über die erneuerbare Energiequelle, die Menge an erzeugter Energie und das Datum der Erzeugung. Es enthält auch eine eindeutige Identifikationsnummer, mit der der Strom verfolgt werden kann, wenn er verkauft und verbraucht wird. Das GO-Zertifikat kann von Stromversorgern verwendet werden, um zu zeigen, dass sie ihre Verpflichtungen aus der EU-Richtlinie für erneuerbare Energien erfüllen, und von Verbrauchern, um zu zeigen, dass sie erneuerbare Energie verbrauchen.

Nachteilig bei dem GO-Zertifikat ist jedoch, dass es oft nicht die Realität der Energieerzeugung angibt. Beispielsweise kann für in Portugal mit 0 kg COz/MWh von einem photovoltaischen Kraftwerk erzeugte elektrische Energie beim Verbrauch in Deutschland mit 402 kg CO₂/MWh zertifiziert sein. Ein weiteres Problem ist, dass sich die COz-Emission für aus dem elektrischen Versorgungsnetz bezogenem Strom im Bereich von Orten in derselben Straße unterscheiden kann. Beispielsweise wird 1 GO für eine elektrische Energie ausgestellt, die in Portugal mit 0 kg COz/MWh durch ein Photovoltaik-Kraftwerk erzeugt wurde. Sie kann auf dem Markt an einen Verbraucher in Deutschland verkauft werden, dessen tatsächlicher Kohlenstoffausstoß 402 kg COz/KWh beträgt. Nach der derzeitigen GO-Regelung kann ein Verbraucher seine Kohlenstoffdioxidemissionen in der Bilanz ausgleichen, aber er weist nicht seine tatsächliche Menge an Kohlenstoffdioxidemissionen aus. Folglich ist es für einen Verbraucher in der Realität nicht möglich, seinen Verbrauch an elektrischer Energie derart zeitlich zu steuern, dass er tatsächlich keine Kohlenstoffdioxidemission verursacht oder seine verursachte Kohlenstoffdioxidemission reduziert.

Die CN 105787651 A offenbart eine Technik zur Bewertung eines quellenseitigen Verschmutzungs- und Kohlenstoffemissionsniveaus eines regionalen Stromnetzes. Die Technik nutzt Online-Überwachungsdaten von Schadstoffen wie SOz, NOX, Staub und COz sowie elektrische Daten einer regionalen Stromnetz-Zeitplankontrollzentrum-Datenbank, um Schadstoff- und Kohlenstoffemissionen auf der Stromquellenseite zu berechnen.

Die CN 105930971 A betrifft ein Verfahren zur Ermittlung und Darstellung einer COz-Emission eines Stromnetzes, das auf einer Simulation des Energieflusses innerhalb des Stromnetzes, insbesondere von der Erzeuger- zur Verbraucherseite, basiert.

### ABRISS DER OFFENBARUNG

Der vorliegenden Offenbarung liegt die Aufgabe zugrunde, eine Technik zur Kohlenstoffdioxid-Nachverfolgung bei der Wasserstofferzeugung bereitzustellen, mit dessen Hilfe präziser bestimmt werden kann, wie viel Kohlenstoffdioxid bei der Wasserstofferzeugung emittiert wird, so dass eine Verringerung der Kohlenstoffdioxidemission bei der Wasserstofferzeugung ermöglicht wird.

Zur Lösung dieser Aufgabe wird eine Vorrichtung zur Kohlenstoffdioxid-Nachverfolgung vorgeschlagen, die Folgendes umfasst: eine erste Kommunikationsvorrichtung, die dazu eingerichtet ist, von einem Wasserstofferzeuger erste Daten betreffend eine von dem Wasserstofferzeuger erzeugte Wasserstoffmenge und eine für die Erzeugung der Wasserstoffmenge eingesetzte erste elektrische Energiemenge zu empfangen, eine erste Verarbeitungsvorrichtung, die dazu eingerichtet ist, zweite Daten betreffend eine emittierte Kohlenstoffdioxidmenge, die einem Verbrauch einer zweiten elektrischen Energiemenge am Ort des Wasserstofferzeugers zugeordnet ist, zu erlangen, wobei die erste Verarbeitungsvorrichtung ferner dazu eingerichtet ist, basierend auf den ersten Daten und den zweiten Daten der von dem Wasserstofferzeuger erzeugten Wasserstoffmenge eine Kohlenstoffdioxidemissionsmenge zuzuordnen, ein vertrauenswürdiges Plattformmodul, das dazu eingerichtet ist, die der erzeugten Wasserstoffmenge zugeordnete Kohlenstoffdioxidemissionsmenge zu verschlüsseln und zu zertifizieren, und eine zweite Kommunikationsvorrichtung, die dazu eingerichtet ist, die verschlüsselten und zertifizierten Daten zu senden.

Bei dem Wasserstofferzeuger kann es sich um jede Art von Vorrichtung zur Erzeugung von Wasserstoff, wie ein Elektrolyseur, der Wasser in seine Bestandteile Wasserstoff und Sauerstoff zerlegt, handeln. Bei dem Elektrolyseur kann es sich auch um einen Ammoniak-Elektrolyseur handeln. Für die Erzeugung des Wasserstoffs wird elektrische Energie verwendet, die der Wasserstofferzeuger lokal aus einem elektrischen Versorgungsnetz bezieht. Es ist auch denkbar, dass der Wasserstofferzeuger exklusiv oder zusätzlich von einem separaten Kraftwerk, beispielsweise von einem Windenergie-Kraftwerk, elektrische Energie bezieht.

Bei der ersten Kommunikationsvorrichtung kann es sich um jede Art von Kommunikationsmittel handeln, das eine Kommunikation, insbesondere eine bidirektionale Kommunikation, mit dem Wasserstofferzeuger ermöglicht. Beispielsweise handelt es sich bei der ersten Kommunikationsvorrichtung um eine Kommunikationsvorrichtung, die über eine drahtgebundene Kommunikationsschnittstelle, z.B. über Ethernet, RS-485 oder RS-232, mit einer Kommunikationsvorrichtung in dem Wasserstofferzeuger kommuniziert. Alternativ oder zusätzlich ist auch eine drahtlose Kommunikationsschnittstelle, z.B. eine Mobilfunk- oder WLAN-Schnittstelle, eine Bluetooth-Schnittstelle oder auf andere drahtlose Kommunikationstechnologien mit geringem Stromverbrauch (wie z. B. Sigfox, LoRaWAN, NB-IoT, usw.) basierende Schnittstellen, möglich. Über die erste Kommunikationsvorrichtung kann auch eine eindeutige Identifikation (ID) des Wasserstofferzeugers gesendet bzw. empfangen werden.

Die von dem Wasserstofferzeuger erzeugte Wasserstoffmenge kann beispielsweise in Gramm (g) und die für die Erzeugung der Wasserstoffmenge eingesetzte erste elektrische Energiemenge kann beispielsweise in Kilowattstunden (kWh) angegeben werden. Bei der ersten Verarbeitungsvorrichtung kann es sich beispielsweise um einen Mikrocontroller handeln. Bei der ersten Verarbeitungsvorrichtung kann es sich auch um jede Art von EDGE-Verarbeitungsvorrichtung handeln. Die emittierte Kohlenstoffdioxidmenge und die Kohlenstoffdioxidemissionsmenge können beispielsweise in Gramm (g) und die zweite elektrische Energiemenge kann beispielsweise in Kilowattstunden (kWh) angegeben werden. Bei dem Ort des Wasserstofferzeugers kann es sich beispielsweise um den genauen Ort des Wasserstofferzeugers (Postadresse, Ortskoordinaten oder Bereiche von Ortskoordinaten in Form von geografischen Koordinaten (Breiten- und Längengrad) oder ortsbezogene ECEF-Koordinaten (Earth-Centered, Earth-Fixed)) oder eine Postleitzahl des Ortes, in dem sich der Wasserstofferzeuger befindet, handeln. Es kann sich auch um eine von einem Real Time Kinematic- (RTK) Modul in der ersten Verarbeitungsvorrichtung erzeugte Positionen handeln.

Bei dem vertrauenswürdiges Plattformmodul kann es sich um jede Art von Plattformmodul zur Datenverschlüsselung und Datenzertifizierung, wie beispielweise ein Trusted Platform Module (TPM), handeln. Das TPM ist ein Sicherheitschip, der in Computern und anderen Geräten integriert werden kann, um die Sicherheit von Daten und Anwendungen zu erhöhen. TPM ist ein internationaler Standard, der von der Trusted Computing Group (TCG) entwickelt wurde. TPMs enthalten Kryptografie-Schlüssel, die verwendet werden können, um Daten zu verschlüsseln und zu entschlüsseln, sowie um die Integrität von Software und Hardware zu überprüfen. Das TPM kann verwendet werden, um die Integrität des Betriebssystems der Vorrichtung zu überprüfen, Daten zu verschlüsseln und die Vertraulichkeit zu gewährleisten und Zugriffsrechte auf bestimmte Daten oder Funktionen zu beschränken. Ferner kann TPM zur Authentifizierung von Benutzern oder Geräten und zum Erstellen von digitalen Signaturen verwendet werden. Das TPM ermöglicht es, dass ein sicheres und geschütztes Umfeld in der Vorrichtung bereitgestellt werden kann, was es erschwert, die Vorrichtung zu manipulieren oder Daten auszuspionieren. Mit Hilfe von TPM-Modulen kann der Eigentümer des Systems auch Daten signieren, um deren Herkunft und Authentizität zu belegen.

Das TPM kann in einer System-on-a-Chip (SoC)-Einheit integriert sein. Die SoC-Einheit ist ein integrierter Schaltkreis (IC), der alle Komponenten eines Computersystems auf einem einzigen Chip vereint. Es kann einen Prozessor, einen Speicher, und Peripherie-Schnittstellen umfassen.

Bei der zweiten Kommunikationsvorrichtung kann es sich wie bei der ersten Kommunikationsvorrichtung um jede Art von Kommunikationsmittel handeln, das eine Kommunikation, insbesondere eine bidirektionale Kommunikation, mit einer externen Einheit ermöglicht.

Somit es möglich, eine von dem Wasserstofferzeuger erzeugte Wasserstoffmenge mit einer der erzeugten Wasserstoffmenge zugeordneten Kohlenstoffdioxidemissionsmenge zu zertifizieren und fälschungssicher auszugeben. Dadurch weiß ein Nutzer der Vorrichtung zur Kohlenstoffdioxid-Nachverfolgung auf zuverlässige Weise, welche Kohlenstoffdioxidemission er bei der Wasserstoffproduktion verursacht und kann Maßnahmen ergreifen, um seine Kohlenstoffdioxidemission zu reduzieren bzw. zu vermeiden. Beispielsweise kann der Nutzer der Vorrichtung zur Kohlenstoffdioxid-Nachverfolgung eine Wasserstoffproduktion derart zeitlich steuern, dass nur dann Wasserstoff erzeugt wird, wenn elektrischer Strom zur Verfügung steht, der ohne eine Kohlenstoffdioxidemission erzeugt wurde.

Die Vorrichtung zur Kohlenstoffdioxid-Nachverfolgung kann ferner eine dritte Kommunikationsvorrichtung, die dazu eingerichtet ist, aggregierte Daten, insbesondere elektrische Messdaten und/oder Wetterdaten, zu empfangen, und eine zweite Verarbeitungsvorrichtung, die dazu eingerichtet ist, basierend auf den aggregierten Daten die zweiten Daten zu erzeugen, und die erzeugten zweiten Daten an die erste Verarbeitungsvorrichtung weiterzuleiten, umfassen.

Bei der dritten Kommunikationsvorrichtung kann es sich wie bei der ersten und zweiten Kommunikationsvorrichtung um jede Art von Kommunikationsmittel handeln, das eine Kommunikation, insbesondere eine bidirektionale Kommunikation, mit externen Kommunikationsmitteln ermöglicht. Bei der zweiten Verarbeitungsvorrichtung kann es sich wie bei der ersten Verarbeitungsvorrichtung um einen Mikrocontroller handeln. Bei der ersten Verarbeitungsvorrichtung und der zweiten Verarbeitungsvorrichtung kann es sich auch um eine einzige Verarbeitungsvorrichtung, beispielsweise einen Mikrocontroller oder jede Art von EDGE-Verarbeitungsvorrichtung, handeln.

Gemäß dieser Ausführungsform werden die zweiten Daten betreffend die emittierte Kohlenstoffdioxidmenge, die einem Verbrauch einer zweiten elektrischen Energiemenge am Ort des Wasserstofferzeugers zugeordnet ist, in der Vorrichtung zur Kohlenstoffdioxid-Nachverfolgung erzeugt. Dies hat den Vorteil, dass die zweiten Daten nicht von einer externen Einheit empfangen werden müssen, so dass die zweiten Daten einfacher vor einer Manipulation durch Dritte geschützt werden können. Dies vereinfacht auch die Zertifizierung der erzeugten Emissionsdaten. Somit kann der Nutzer der Vorrichtung zur Kohlenstoffdioxid-Nachverfolgung noch präziser nachverfolgen, welche Kohlenstoffdioxidemission er bei der Wasserstoffproduktion verursacht und kann Maßnahmen ergreifen, um seine Kohlenstoffdioxidemission zu reduzieren bzw. zu vermeiden.

Die empfangenen aggregierten Daten, insbesondere elektrischen Messdaten, Geodaten, und/oder Produktionsmessdaten (z. B. H₂ Messung) können mindestens eine der folgenden Daten umfassen: Daten, die eine Menge an elektrischer Energie zeigen, die an einem bestimmten Ort erzeugt und verbraucht wird, lokale Wettervorhersagedaten als Zeitreihendaten und georäumliche Energienetz- und Verbraucher-Metadaten. Um die Genauigkeit der zweiten Daten zu erhöhen, können die elektrischen Messdaten, Geodaten, und/oder Produktionsmessdaten ferner mindestens eine der folgenden Daten umfassen: Daten betreffend eine lokale Stromerzeugung, und lokale elektrische Energieverbrauchsdaten einer elektrischen Anlage als Zeitreihendaten. Daten aus weiteren Quellen, wie z. B. Daten die basierend auf einer Analyse des Stromflusses und seiner Topologie-Lasten sowie Live-Asset-Daten (Zähler, DERs, RLM, usw.) erzeugt wurden, können ebenfalls verwendet werden. Basierend auf diesen Daten kann der Nutzer der Vorrichtung zur Kohlenstoffdioxid-Nachverfolgung noch präziser nachverfolgen, welche Kohlenstoffdioxidemission er bei der Wasserstoffproduktion verursacht und kann Maßnahmen ergreifen, um eine Kohlenstoffdioxidemission zu reduzieren bzw. zu vermeiden.

Ferner können die die die zweiten Daten betreffend die emittierte Kohlenstoffdioxidmenge, die einem Verbrauch einer zweiten elektrischen Energiemenge am Ort des Wasserstofferzeugers zugeordnet ist, basierend auf Daten aus folgenden Quellen erzeugt werden: Hardware-Sensoren und -Zähler zur Bereitstellung analoger bzw. digitaler Daten, Daten von Supervisory Control and Data Acquisition- (SCADA) Systemen (ein System zur Fernüberwachung und -steuerung von industriellen Prozessen; es sammelt Daten von Sensoren und Aktoren an verschiedenen Standorten und überträgt sie an eine zentrale Steuerungsstelle, wo die Daten angezeigt und analysiert werden können), vertrauenswürdige Daten (sie garantieren Datenerzeugern, dass sie wissen, wer ihre Daten wie lange, zu welchem Zweck, wie oft und unter welchen Bedingungen verwendet) von Open-Source-Application Programming Interfaces (APIs), d. h. eine Art von Schnittstelle, die es Entwicklern ermöglicht, auf die Funktionalität einer Anwendung oder eines Systems zuzugreifen. Sie ermöglicht es Programmen, miteinander zu kommunizieren und Daten auszutauschen, ohne dass die internen Funktionsweisen jeder Anwendung bekannt sein müssen. Das API definiert, welche Art von Anfragen von Programmen gestellt werden können und wie die Anwendung oder das System auf diese Anfragen reagieren soll. Die APIs können auf verschiedene Arten bereitgestellt werden, einschließlich HTTP-basierter Web-APIs und lokalen APIs, die in derselben Vorrichtung ausgeführt werden.

Beispielsweise werden von der dritten Kommunikationsvorrichtung Daten von Übertragungsnetzbetreibern (TSOs) empfangen (entsprechend von einer Regional Transmission Organization (RTO) in den USA). Von der dritten Kommunikationsvorrichtung können auch ENTSO-E (Europäische Netzwerk der Übertragungsnetzbetreiber für Strom) Erzeugungs- und Verbrauchsdaten empfangen werden. ENTSO-E-Daten werden von TSOs verwendet, um die Planung und Verwaltung des Stromübertragungssystems zu unterstützen, sowie von anderen Interessengruppen wie Regulierern und Marktteilnehmern, um die Funktionsweise des Strommarktes zu überwachen.

Von der dritten Kommunikationsvorrichtung können auch georäumliche Metadaten Markstammdatenregister & INFAS30-Daten empfangen werden. Geo-räumliche Metadaten beziehen sich auf Daten, die die Lage, Zeit und andere Merkmale von geographischen Daten beschreiben.

Das Markstammdatenregister (MSDR) ist ein deutsches Register, das Metadaten über das deutsche Stromnetz enthält. Es wird von den deutschen TSOs gepflegt und enthält Informationen über die Lage und technischen Merkmale von Kraftwerken, Unterstationen, Übertragungsleitungen und Daten jeweiliger Verteilungsnetzbetreiber (Distribution System Operator - DSO), wie z.B. die Netztopologie auf der Niederspannungsebene.

INFAS30-Daten sind mögliche Eingangsdaten von deutschen TSOs für das MSDR. Es basiert auf dem ISO/IEC 19115-Standard für geo-räumliche Metadaten und bietet eine konsistente Möglichkeit, die Metadaten für ein Stromnetz zu beschreiben. Es enthält Informationen wie die Lage, Leistung und Art von Kraftwerken, Unterstationen und Übertragungsleitungen. Sowohl MSDR als auch INFAS30 werden verwendet, um die TSOs und DSOs bei der Verwaltung des Stromnetzes und der Bereitstellung von Informationen über das Stromnetz an andere Interessenten zu unterstützen.

Basierend auf den zweiten Daten betreffend die emittierte Kohlenstoffdioxidmenge kann der Nutzer der Vorrichtung zur Kohlenstoffdioxid-Nachverfolgung folglich noch genauer nachverfolgen, welche Kohlenstoffdioxidemission er bei der Wasserstoffproduktion verursacht und kann Maßnahmen ergreifen, um seine Kohlenstoffdioxidemission zu reduzieren bzw. zu vermeiden.

Gemäß einer Ausführungsform umfasst die zweite Verarbeitungsvorrichtung eine Maschinenlernvorrichtung, eine Disaggregationsvorrichtung und eine Rechenvorrichtung, wobei die Maschinenlernvorrichtung dazu eingerichtet ist, basierend auf den elektrischen Messdaten und/oder Wetterdaten mit Hilfe eines Maschinenlernmodells Vorhersagedaten der elektrischen Messdaten zu berechnen, die Disaggregationsvorrichtung dazu eingerichtet ist, die Vorhersagedaten der elektrischen Messdaten mit Ortsdaten zu verknüpfen und die Rechenvorrichtung dazu eingerichtet ist, basierend auf den Daten der Disaggregationsvorrichtung, die zweiten Daten zu berechnen. Mit Hilfe dieser künstlichen Intelligenz kann der Nutzer der Vorrichtung zur Kohlenstoffdioxid-Nachverfolgung noch genauer bestimmen, welche Kohlenstoffdioxidemission er bei der Wasserstoffproduktion verursacht und kann Maßnahmen ergreifen, um eine Kohlenstoffdioxidemission zu reduzieren bzw. zu vermeiden.

Vorzugsweise kann die Disaggregationsvorrichtung dazu eingerichtet sein, elektrische Versorgungsnetzdaten eines nationalen elektrischen Versorgungsnetzes auf ein lokales geografisches Gebiet zu disaggregieren.

Die Rechenvorrichtung kann dazu eingerichtet sein, eine Schätzung der zweiten Daten auf lokaler Ebene, beispielsweise einer Postleitzahlenebene, für jede Energieerzeugungsart im Verhältnis zu einer lokal installierten Energieerzeugungskapazität als Anteil an einer gesamten nationalen Energieerzeugungskapazität zu berechnen.

Für eine Schätzung der Kohlenstoffdioxidemission kann eine Vorhersage über das lokale Verhalten des elektrischen Versorgungsnetzes für einen aktuellen Tag verwendet werden. Zu diesem Zweck kann das Maschinenlernmodell in der Maschinenlernvorrichtung trainiert verwendet werden, um ein heutiges Verhalten des nationalen elektrischen Versorgungsnetzes auf der Grundlage historischer TSO- und/oder ENTSO-E-Daten vorherzusagen. Das lokale Netzverhalten kann anschließend basierend auf dem Ergebnis der Disaggregationsvorrichtung geschätzt werden.

Zum Trainieren des Maschinenlernmodells in der Maschinenlernvorrichtung können historische TSO- und/oder ENTSO-E Erzeugungs- und Verbrauchsdaten sowie historische Wetterdaten verwendet werden.

Die zweite Verarbeitungsvorrichtung kann dazu eingerichtet sein, die zweiten Daten betreffend eine emittierte Kohlenstoffdioxidmenge, die einem Verbrauch einer zweiten elektrischen Energiemenge am Ort des Wasserstofferzeugers zugeordnet ist, in Echtzeit, in Aktualisierungen von maximal 30 Minuten, von maximal 20 Minuten, oder von maximal 15 Minuten, oder flexibel in Abhängigkeit von Strommarktgegebenheiten zu erzeugen. Folglich kann der Nutzer der Vorrichtung zur Kohlenstoffdioxid-Nachverfolgung zeitgenau bestimmen, welche Kohlenstoffdioxidemission er bei der Wasserstoffproduktion verursacht und kann Maßnahmen ergreifen, um eine Kohlenstoffdioxidemission zu reduzieren bzw. zu vermeiden.

Während der Wasserstofferzeugung können Zeitreihendaten mit Standort, Zeitstempel und der während der Wasserstofferzeugung verbrauchten Strommenge (kWh / g H₂) aufgezeichnet werden.

Um den CO₂-Ausstoß für eine vorgegebene Wasserstoffmenge zu berechnen, können Zeitreihen miteinander verbunden und die COz-Menge, die für die Bereitstellung der erforderlichen Strommenge an dem jeweiligen Standort emittiert wird, summiert werden.

Alternativ oder zusätzlich kann die Vorrichtung zur Kohlenstoffdioxid-Nachverfolgung eine vierte Kommunikationsvorrichtung umfassen, die dazu eingerichtet ist, über eine gesicherte Netzwerkverbindung, die zweiten Daten betreffend eine emittierte Kohlenstoffdioxidmenge, die einem Verbrauch einer zweiten elektrischen Energiemenge am Ort des Wasserstofferzeugers zugeordnet ist, von einem Server zu empfangen. Gemäß dieser Ausführungsform erfolgt die Berechnung der zweiten Daten nicht in der Vorrichtung zur Kohlenstoffdioxid-Nachverfolgung sondern extern, beispielsweise in dem Server. So kann die vorstehend beschriebene Berechnung der zweiten Daten in dem Server erfolgen. Mit Hilfe dieser Ausführungsform kann das System vor Datenmanipulation gesichert werden. Dadurch kann sich der Nutzer der Vorrichtung zur Kohlenstoffdioxid-Nachverfolgung darauf verlassen, dass ihm die genaue Kohlenstoffdioxidemission bei der Wasserstoffproduktion mitgeteilt wird. Entsprechend kann der Nutzer zuverlässige Maßnahmen ergreifen, um eine Kohlenstoffdioxidemission zu reduzieren bzw. zu vermeiden.

Bei der vierten Kommunikationsvorrichtung kann es sich wie bei der ersten bis dritten Kommunikationsvorrichtung um jede Art von Kommunikationsmittel handeln, das eine Kommunikation, insbesondere eine bidirektionale Kommunikation, mit dem Server ermöglicht.

Bei der gesicherten Netzwerkverbindung kann es sich um eine Verbindung handeln, die durch Sicherheitsmaßnahmen geschützt ist, um unbefugten Zugriff zu verhindern und die Integrität der übertragenen Daten zu gewährleisten. Dies kann durch Verwendung von Verschlüsselungstechnologien, Authentifizierungsverfahren und Firewalls erreicht werden. Beispielsweise können folgenden Sicherheitsmaßnahmen verwendet werden: ein Virtual Private Network (VPN), d.h., eine Verbindung, die es ermöglicht, sicher über ein öffentliches Netzwerk wie das Internet auf ein privates Netzwerk zugreifen zu können. VPNs verwenden Verschlüsselungstechnologien, um die Daten vor unbefugtem Zugriff zu schützen; ein Secure Socket Layer (SSL) und Transport Layer Security (TLS): Diese Technologien werden verwendet, um Datenübertragungen über das Internet zu sichern, indem sie die Daten verschlüsseln, die zwischen einem Webbrowser und einem Webserver ausgetauscht werden; Wireless Protected Access (WPA) und WPA2: Diese Sicherheitsstandards werden verwendet, um die Sicherheit von drahtlosen Netzwerken zu erhöhen, indem sie die Datenübertragung verschlüsseln und den Zugriff auf das Netzwerk durch Authentifizierung beschränken; und Firewalls: Eine Firewall ist eine Hardware oder Software, die das Netzwerk vor unbefugtem Zugriff schützt, indem sie den Datenverkehr überwacht und bestimmte Arten von Verbindungen blockiert.

Diese Ausführungsform mit dem Server hat insbesondere dann einen Vorteil, wenn eine Vielzahl von Vorrichtungen zur Kohlenstoffdioxid-Nachverfolgung zum Einsatz kommen und alle Vorrichtungen die zweiten Daten von dem selben Server erhalten, so dass eine einfache Skalierung möglich ist. Ferner gibt es den technischen Vorteil, dass eine zweite Verarbeitungsvorrichtung, insbesondere die erforderliche Prozessorkapazität für eine zweite Verarbeitungsvorrichtung, vermieden werden kann.

Zur Reduzierung oder Verhinderung unnötiger Kohlenstoffdioxidemission kann die Vorrichtung zur Kohlenstoffdioxid-Nachverfolgung ferner eine Steuerungsvorrichtung umfassen, die dazu eingerichtet ist, basierend auf der der erzeugten Wasserstoffmenge zugeordneten Kohlenstoffdioxidemissionsmenge Steuerungsbefehle für den Wasserstofferzeuger zu erzeugen und die Steuerungsbefehle über die erste Kommunikationsvorrichtung an den Wasserstofferzeuger zu senden. Diese Ausführungsform hat den technischen Vorteil, dass der Nutzer der Vorrichtung zur Kohlenstoffdioxid-Nachverfolgung den Wasserstofferzeuger zeitlich derart steuern kann, dass dieser während der Wasserstofferzeugung keine oder nur eine reduzierte Kohlenstoffdioxidemission verursacht.

Die Steuerungsvorrichtung kann insbesondere dazu eingerichtet sein, Steuerungsbefehle zu erzeugen, die den Wasserstofferzeuger veranlassen, wenn eine emittierte Kohlenstoffdioxidmenge, die einem Verbrauch einer elektrischen Energiemenge am Ort des Wasserstofferzeugers zugeordnet ist, einen Schwellenwert übersteigt, keine oder eine reduzierte Menge an Wasserstoff zu erzeugen. Insbesondere kann eine geregelte Steuerung des Wasserstofferzeugers durch die Vorrichtung zur Kohlenstoffdioxid-Nachverfolgung in Echtzeit, erfolgen. Da der erzeugte Wasserstoff Energie speichert, kann zur Herstellung von grünem Wasserstoff der Wasserstofferzeuger nur dann eingesetzt werden, wenn elektrische Energie, die ohne Kohlenstoffdioxidemission erzeugt wurde, zur Verfügung steht.

Diese Ausführungsform liefert den technischen Vorteil, dass die Emission an Kohlenstoffdioxid reduziert werden kann.

Die Steuerungsvorrichtung kann als Mikrocontroller oder jede Art von EDGE-Verarbeitungsvorrichtung ausgebildet sein. Insbesondere können die erste Verarbeitungsvorrichtung, die zweite Verarbeitungsvorrichtung und die dritte Steuerungsvorrichtung als eine Vorrichtung, beispielsweise als ein Mikrocontroller oder eine EDGE-Verarbeitungsvorrichtung, ausgebildet sein.

Zur sicheren Speicherung und weiteren Verwendbarkeit der der erzeugten Wasserstoffmenge zugeordneten Kohlenstoffdioxidemissionsmenge kann die zweite Kommunikationsvorrichtung ferner dazu eingerichtet sein, die verschlüsselten und zertifizierten Daten an ein Blockchain-Netzwerk zu senden. Das Blockchain-Netzwerk ist eine Art von verteiltem Ledger-System, das es ermöglicht, digitale Transaktionen sicher und transparent zu speichern und zu verarbeiten. Es besteht aus einer Kette von Blöcken, die miteinander verkettet sind und die Transaktionsdaten enthalten. Jeder Block enthält eine Liste von Transaktionen sowie einen Hash, der auf den vorherigen Block verweist. Durch diese technische Maßnahme kann sich der Nutzer der Vorrichtung zur Kohlenstoffdioxid-Nachverfolgung darauf verlassen, dass ihm die genaue (d. h. fälschungssicher richtige) Kohlenstoffdioxidemissionsmenge bei der Wasserstoffproduktion mitgeteilt wird. Entsprechend kann er zuverlässige Maßnahmen ergreifen, um seine Kohlenstoffdioxidemission zu reduzieren bzw. zu vermeiden.

Zur weiteren Sicherung der Vorrichtung zur Kohlenstoffdioxid-Nachverfolgung vor unerkanntem Zugriff durch Dritte kann die Vorrichtung zur Kohlenstoffdioxid-Nachverfolgung ferner ein Gehäuse umfassen, das verplombt ist und/oder wobei ein Öffnungsmechanismus des Gehäuses mit Signallack versehen ist. Beispielsweise kann ein Schloss des Gehäuses mit Signallack bedeckt sein.

Die eingangs gestellte Aufgabe wird auch durch ein System zur Kohlenstoffdioxid-Nachverfolgung gelöst, dass eine vorstehend beschriebene Vorrichtung zur Kohlenstoffdioxid-Nachverfolgung und einen Wasserstofferzeuger umfasst. So kann die Vorrichtung den Wasserstofferzeuger je nach Kohlenstoffdioxidemissionslage steuern, z. B. an- und ausschalten, so dass der Nutzer der Vorrichtung die Kohlenstoffdioxidemission bei der Wasserstoffproduktion reduzieren bzw. vermeiden kann.

Ferner kann das System zur Kohlenstoffdioxid-Nachverfolgung einen Server (z. B. einen gesicherten Web-Server) umfassen, der dazu eingerichtet ist, über eine gesicherte Netzwerkverbindung die zweiten Daten an die vierte Kommunikationsvorrichtung zu senden. Die gesicherte Netzwerkverbindung kann wie vorstehend hinsichtlich der vierten Kommunikationsvorrichtung erläutert gesichert sein.

Gemäß einer Weiterbildung kann das System zur Kohlenstoffdioxid-Nachverfolgung eine Vielzahl von Vorrichtungen zur Kohlenstoffdioxid-Nachverfolgung umfassen, wobei jeder der Vorrichtungen zur Kohlenstoffdioxid-Nachverfolgung dazu eingerichtet ist, über eine gesicherte Netzwerkverbindung, die zweiten Daten von dem Server zu empfangen. Jeder der Vielzahl von Vorrichtungen zur Kohlenstoffdioxid-Nachverfolgung kann ein Wasserstofferzeuger zugeordnet sein. Dabei kann die Erzeugung der zweiten Daten zentral in dem Server erfolgen. Dies hat den technischen Vorteil, dass die in den Vorrichtungen zur Kohlenstoffdioxid-Nachverfolgung benötigten Rechenleistungen reduziert werden können.

Die eingangs gestellte Aufgabe wird auch durch ein System zur Kohlenstoffdioxidemissionszertifizierung gelöst, das ein vorstehend beschriebenes System zur Kohlenstoffdioxid-Nachverfolgung und ein Blockchain-Netzwerk umfasst.

Die eingangs gestellte Aufgabe wird ferner durch ein System zur Wasserstoffzertifizierung umfassend eine vorstehend beschriebene Vorrichtung zur Kohlenstoffdioxid-Nachverfolgung und eine Plattform, die mit der Vorrichtung zur Kohlenstoffdioxid-Nachverfolgung in Kommunikationsverbindung steht, gelöst. Die Vorrichtung zur Kohlenstoffdioxid-Nachverfolgung ist dazu eingerichtet, Daten betreffend eine Menge an Kohlenstoffdioxid, die bei einer Erzeugung von elektrischer Energie freigesetzt wird, zu erhalten, Daten betreffend einen Verbrauch von elektrischer Energie bei einer Erzeugung von Wasserstoff durch einen Wasserstofferzeuger zu empfangen, Daten betreffend eine Menge an Kohlenstoffdioxid, die bei der Erzeugung von Wasserstoff freigesetzt wird, zu bestimmen und an die Plattform zu senden, zertifizierte Daten betreffend eine Menge an Kohlenstoffdioxid, die bei der Erzeugung von Wasserstoff freigesetzt wird, von der Plattform zu empfangen, und in Abhängigkeit von den bestimmten und den zertifizierten Daten betreffend eine Menge an Kohlenstoffdioxid, die bei der Erzeugung von Wasserstoff freigesetzt wird, Steuerungsbefehle zum Steuern der Erzeugung von Wasserstoff durch den Wasserstofferzeuger auszugeben. Die Plattform ist ferner dazu eingerichtet ist, basierend auf den Daten betreffend die Menge an Kohlenstoffdioxid, die bei der Erzeugung von Wasserstoff freigesetzt wird, den durch den Wasserstofferzeuger erzeugten Wasserstoff hinsichtlich der Menge an Kohlenstoffdioxid, die bei der Erzeugung von Wasserstoff freigesetzt wird, zu zertifizieren.

Folglich liefert diese Ausführungsform den technischen Vorteil, dass der Wasserstofferzeuger zeitlich derart gesteuert werden kann, dass dieser keine oder nur eine reduzierte Kohlenstoffdioxidemission verursacht. Beispielsweise kann die Vorrichtung zur Kohlenstoffdioxid-Nachverfolgung einen Wasserstofferzeuger zeitlich derart steuern, dass dieser nur dann Wasserstoff erzeugt, wenn 100 % Solarstrom zur Verfügung steht.

Bei der Plattform kann es sich um einen Cloud-Server handeln, der mit der Vorrichtung zur Kohlenstoffdioxid-Nachverfolgung in Kommunikationsverbindung steht, beispielsweise über das Internet. Die Vorrichtung zur Kohlenstoffdioxid-Nachverfolgung kann die Daten betreffend eine Menge an Kohlenstoffdioxid, die bei einer Erzeugung von elektrischer Energie freigesetzt wird, von einem weiteren Cloud-Server empfangen. Der weitere Cloud-Server kann diese Daten mit Hilfe eines Datenmodells bestimmen. Ferner können Verarbeitungsschritte und Logiken vorgesehen sein, die von Maschinenlern-Algorithmen unterstützt werden. Alternativ kann die Vorrichtung zur Kohlenstoffdioxid-Nachverfolgung die Daten betreffend eine Menge an Kohlenstoffdioxid, die bei einer Erzeugung von elektrischer Energie freigesetzt wird, selbst bestimmen.

Die Plattform kann ferner dazu eingerichtet sein, von einem Wasserstoffbetreiber Daten betreffend Wasserstoff-Erzeugungspräferenzen zu erhalten und/oder von einer Marktplattform Daten betreffend Wasserstoff-Zertifizierungen, so wie PPAs und GOs, zu erhalten. Insbesondere kann die Plattform dazu eingerichtet sein, dass sie die COz-Emissionen der Wasserstoffproduktion mit Hilfe eines Verwahrungsmodells (custody model) wie der Massenbilanz verfolgt und berechnet.

Das derzeitig meistgenutzte Zertifizierungssystem basiert auf dem "Book and Claim"-System. Dieses System wurde entwickelt, um Nutzern die Möglichkeit zu geben, eine bestimmte Menge an erneuerbarer Energie zu beanspruchen. Stromanbieter können den von ihnen erzeugten Strom in ihre Systeme eingeben oder "buchen", und die Nutzer können die von ihnen gekaufte grüne Energie "einfordern". In dieser Infrastruktur wird in dieser Offenbarung vorgeschlagen, zu mehr physikalischen Ansätzen wie der Massenbilanz überzugehen. Bei der Massenbilanz geht es darum, fossile und recycelte oder erneuerbare Energieträger in bestehenden Systemen und Prozessen zu mischen, ihre Mengen zu verfolgen und sie bestimmten Produkten zuzuordnen.

Die oben beschriebenen Aspekte und Varianten können kombiniert werden, ohne dass dies explizit beschrieben ist. Jede der beschriebenen Ausgestaltungsvarianten ist somit optional zu jeder Ausgestaltungsvariante oder Kombinationen davon zu sehen. Die vorliegende Offenbarung ist somit nicht auf die einzelnen Ausgestaltungen und Varianten in der beschriebenen Reihenfolge oder einer bestimmten Kombination der Aspekte und Ausgestaltungsvarianten beschränkt.

### KURZE BESCHREIBUNG DER ZEICHNUNGEN

Weitere Vorteile, Einzelheiten und Merkmale der hier beschriebenen Vorrichtungen, Systeme und Verfahren ergeben sich aus der nachfolgenden Beschreibung von Ausführungsbeispielen und den Figuren.
- Fig. 1: zeigt eine schematische Darstellung eines ersten Ausführungsbeispiels eines Systems zur Kohlenstoffdioxid-Nachverfolgung;
- Fig. 2: zeigt eine schematische Darstellung eines ersten Ausführungsbeispiels einer Vorrichtung zur Kohlenstoffdioxid-Nachverfolgung;
- Fig. 3: zeigt eine schematische Darstellung eines zweiten Ausführungsbeispiels eines Systems zur Kohlenstoffdioxid-Nachverfolgung;
- Fig. 4: zeigt eine schematische Darstellung eines dritten Ausführungsbeispiels eines Systems zur Kohlenstoffdioxid-Nachverfolgung;
- Fig. 5: zeigt eine schematische Darstellung eines zweiten Ausführungsbeispiels einer Vorrichtung zur Kohlenstoffdioxid-Nachverfolgung; und
- Fig. 6: zeigt eine schematische Darstellung eines Ausführungsbeispiels eines Systems zur Wasserstoffzertifizierung.

### DETAILLIERTE BESCHREIBUNG

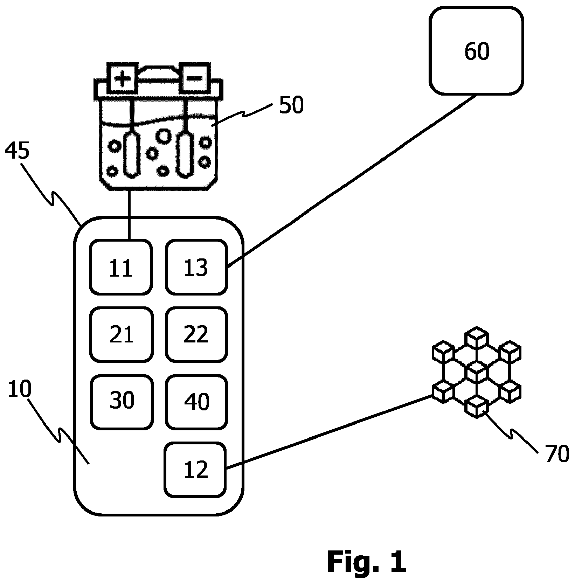

Die Fig. 1 zeigt eine schematische Darstellung eines ersten Ausführungsbeispiels eines Systems zur Kohlenstoffdioxid-Nachverfolgung. Das System umfasst eine Vorrichtung zur Kohlenstoffdioxid-Nachverfolgung 10, einen Wasserstofferzeuger bzw. Elektrolyseur 50, eine Datenquelle 60 und ein Blockchain-Netzwerk 70.

Bei der Vorrichtung zur Kohlenstoffdioxid-Nachverfolgung 10 handelt es sich um ein integriertes System mit einem Gehäuse 45. Die Vorrichtung zur Kohlenstoffdioxid-Nachverfolgung 10 umfasst eine erste Kommunikationsvorrichtung 11, eine zweite Kommunikationsvorrichtung 12, eine dritte Kommunikationsvorrichtung 13, eine erste Verarbeitungsvorrichtung 21, eine zweite Verarbeitungsvorrichtung 22, ein vertrauenswürdiges Plattformmodul 30 und eine Steuerungsvorrichtung 40.

Über eine drahtgebundene Verbindung (beispielsweise Ethernet, RS-485 oder RS-232) ist die erste Kommunikationsvorrichtung 11 mit dem Elektrolyseur 50, d.h. einer Kommunikationsvorrichtung in dem Elektrolyseur (in Fig. 1 nicht gezeigt), verbunden. Die erste Kommunikationsvorrichtung 11 empfängt von dem Elektrolyseur erste Daten betreffend eine von dem Elektrolyseur 50 erzeugte Wasserstoffmenge und eine für die Erzeugung der Wasserstoffmenge eingesetzte erste elektrische Energiemenge.

Die dritte Kommunikationsvorrichtung 13 empfängt von der Datenquelle 60 Daten, die eine Menge an elektrischer Energie zeigen, die in einem bestimmten Gebiet oder einer bestimmten Region erzeugt und verbraucht wird, und/oder lokale Wettervorhersagedaten als Zeitreihendaten und georäumliche Energienetz- und Verbraucher-Metadaten. Optional kann die dritte Kommunikationsvorrichtung 13 von der Datenquelle 60 Daten betreffend eine lokale Stromerzeugung und lokale elektrische Energieverbrauchsdaten einer elektrischen Anlage als Zeitreihendaten empfangen. Die dritte Kommunikationsvorrichtung 13 leitet die empfangenen Daten an die zweite Verarbeitungsvorrichtung 22 weiter, wo diese verarbeitet werden. Das Ergebnis der Verarbeitung durch die zweite Verarbeitungsvorrichtung 22 sind zweite Daten betreffend eine emittierte Kohlenstoffdioxidmenge, die einem Verbrauch einer zweiten elektrischen Energiemenge am Ort des Elektrolyseurs 50 zugeordnet ist. Diese zweiten Daten werden von der zweiten Verarbeitungsvorrichtung 22 an die erste Verarbeitungsvorrichtung 21, die ebenfalls als ein Mikrocontroller oder ein integrierter eigenständiger Computer ausgebildet ist, weitergeleitet.

Bei der Datenquelle 60 kann es sich beispielsweise um einen Server (oder eine Vielzahl von Servern) handeln, welche die Daten an die dritte Kommunikationsvorrichtung 13 sendet.

In einer alternativen Ausführungsform (in Fig. 1 nicht gezeigt) sind die erste Verarbeitungsvorrichtung 21 und die zweite Verarbeitungsvorrichtung 22 als eine Verarbeitungsvorrichtung, beispielsweise als eine EDGE-Recheneinheit, ausgebildet.

Die erste Verarbeitungsvorrichtung 21 ordnet, basierend auf den ersten Daten und den zweiten Daten der von dem Elektrolyseur 50 erzeugten Wasserstoffmenge eine Kohlenstoffdioxidemissionsmenge zu.

Das als TPM-Modul ausgebildete vertrauenswürdige Plattformmodul 30 verschlüsselt und zertifiziert die der erzeugten Wasserstoffmenge zugeordnete Kohlenstoffdioxidemissionsmenge und leitet die verschlüsselten und zertifizierten Daten an die zweite Kommunikationsvorrichtung 12 weiter. Die zweite Kommunikationsvorrichtung 12 sendet anschließend die verschlüsselten und zertifizierten Daten an das Blockchain-Netzwerk 70. Außerdem werden diese verschlüsselten und zertifizierten/signierten Daten an ein Cloud-System (z. B. Microsoft Azure) gesendet und können für andere Anwendungen, wie Net-Zero-Management, Steuerung eines Elektrolyseurs, Green H₂ Handel usw., verwendet werden.

Die zweite Verarbeitungsvorrichtung 22 erzeugt die zweiten Daten in Echtzeit. Basierend auf der der erzeugten Wasserstoffmenge zugeordneten Kohlenstoffdioxidemissionsmenge erzeugt die Steuerungsvorrichtung 40 Steuerungsbefehle für den Elektrolyseur 50. Die Steuerungsvorrichtung 40 sendet die erzeugten Steuerungsbefehle über die erste Kommunikationsvorrichtung 11 an den Elektrolyseur 50, wo diese umgesetzt werden. Die Steuerungsvorrichtung 40 erzeugt derartige Steuerungsbefehle, die den Elektrolyseur 50 veranlassen, wenn eine emittierte Kohlenstoffdioxidmenge, die einem Verbrauch einer elektrischen Energiemenge am Ort des Wasserstofferzeugers (50) zugeordnet ist, einen Schwellenwert übersteigt, keine oder eine reduzierte Menge an Wasserstoff zu erzeugen. So kann die Steuerungsvorrichtung 40 den Elektrolyseur 50 in Echtzeit in Abhängigkeit von einer zeitlich aktuellen Kohlenstoffdioxidemissionssituation, insbesondere basierend auf der Art der elektrischen Messdaten und der Kohlendioxidemission, steuern.

Zur Sicherung der Vorrichtung zur Kohlenstoffdioxid-Nachverfolgung 10 vor unerkanntem Zugriff durch Dritte umfasst die Vorrichtung zur Kohlenstoffdioxid-Nachverfolgung 10 das Gehäuse 45, welches verplombt ist, wobei ein Öffnungsmechanismus des Gehäuses 45 mit Signallack versehen ist. Insbesondere ist ein Schloss des Gehäuses 45 mit Signallack bedeckt, sodass beim Öffnen des Gehäuses 45 der Signallack zerstört wird, wodurch das Öffnen des Gehäuses 45 dokumentiert, d. h sichtbar, wird. Zu Sicherheit trägt ferner das TPM-Modul 30 bei, das einen Schutz vor Manipulationen bietet.

Somit es möglich, eine von dem Wasserstofferzeuger erzeugte Wasserstoffmenge mit einer der erzeugten Wasserstoffmenge zugeordneten Kohlenstoffdioxidemissionsmenge zu zertifizieren und fälschungssicher auszugeben.

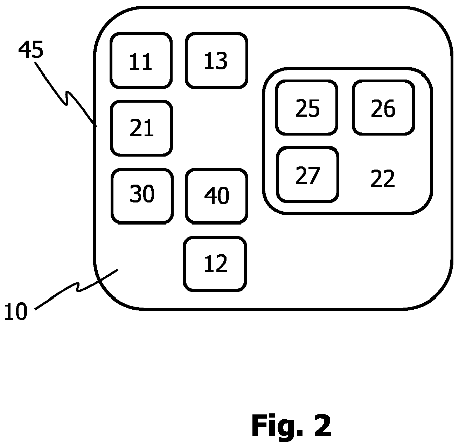

Die Fig. 2 zeigt eine schematische Darstellung eines ersten Ausführungsbeispiels einer Vorrichtung zur Kohlenstoffdioxid-Nachverfolgung. Bei der in der Fig. 2 gezeigten Vorrichtung 10 kann es sich um die in der Fig. 1 gezeigte Vorrichtung 10 oder eine andere Vorrichtung handeln. Gleiche Bezugszeichen betreffen die gleichen Elemente, sodass auf eine erneute Erläuterung verzichtet wird.

Nachfolgend wird erläutert, wie die zweite Verarbeitungsvorrichtung 22 aus den Daten, die eine Menge an elektrischer Energie zeigen, die in einem bestimmten Gebiet oder einer bestimmten Region erzeugt und verbraucht wird, den lokalen Wettervorhersagedaten als Zeitreihendaten, den georäumlichen Energienetz- und Verbraucher-Metadaten, und den optionalen Daten betreffend eine lokale Stromerzeugung und lokalen elektrischen Energieverbrauchsdaten einer elektrischen Anlage als Zeitreihendaten, die zweite Daten betreffend eine emittierte Kohlenstoffdioxidmenge, die einem Verbrauch einer zweiten elektrischen Energiemenge am Ort des Elektrolyseurs 50 zugeordnet ist, berechnet.

Die zweite Verarbeitungsvorrichtung 22 umfasst eine Maschinenlernvorrichtung 25, eine Disaggregationsvorrichtung 26 und eine Rechenvorrichtung 27.

Die Maschinenlernvorrichtung 25 ist dazu eingerichtet, basierend auf den von der Datenquelle 60 empfangene elektrischen Messdaten und/oder Wetterdaten mit Hilfe eines Maschinenlernmodells Vorhersagedaten der elektrischen Messdaten zu berechnen, insbesondere eine Art der gemischten Energie auf der Grundlage des Top-Down-Ansatzes, bei dem die elektrischen Messdaten und/oder Wetterdaten und andere Daten aus der Datenquelle 60 mithilfe eines maschinellen Lernmodells abgerufen werden, vorherzusagen. Die Disaggregationsvorrichtung 26 ist dazu eingerichtet, die Vorhersagedaten der elektrischen Messdaten von der Maschinenlernvorrichtung 25 mit Ortsdaten und/oder lokalen Verbrauchsdaten zu verknüpfen. Die Rechenvorrichtung 27 ist dazu eingerichtet, basierend auf den Daten der Disaggregationsvorrichtung 26, die zweiten Daten zu berechnen. Die Disaggregationsvorrichtung 26 ist insbesondere dazu eingerichtet, elektrische Versorgungsnetzdaten eines nationalen elektrischen Versorgungsnetzes auf ein lokales geografisches Gebiet zu disaggregieren. Die Rechenvorrichtung 27 ist ferner dazu eingerichtet ist, eine Schätzung der zweiten Daten auf lokaler Ebene, beispielsweise an einem Ort, auf einer Straßenebene oder auf einer Postleitzahlenebene, für jeden Stromerzeugungstyp im Verhältnis zu einer lokal installierten Energieerzeugungskapazität als Anteil an einer gesamten nationalen Energieerzeugungskapazität zu berechnen.

Für eine Schätzung der Kohlenstoffdioxidemission kann eine Vorhersage über das lokale Verhalten des elektrischen Versorgungsnetzes für einen aktuellen Tag verwendet werden. Zu diesem Zweck kann das Maschinenlernmodell in der Maschinenlernvorrichtung 25 trainiert verwendet werden, um ein aktuelles (heutiges) Verhalten des nationalen elektrischen Versorgungsnetzes auf der Grundlage historischer ENTSO-E-Daten vorherzusagen. Das lokale Netzverhalten kann anschließend basierend auf dem Ergebnis der Disaggregationsvorrichtung geschätzt werden.

Zum Trainieren des Maschinenlernmodells in der Maschinenlernvorrichtung 25 können historische ENTSO-E Erzeugungs- und Verbrauchsdaten sowie historische Wetterdaten verwendet werden.

Aus den Eingabedaten können folgende Daten erzeugt werden: rollierende Statistiken nationaler Erzeugungs- und Verbrauchswerte mit unterschiedlichen Zeitfensterlängen und unterschiedlichen Statistiken, rollierende Statistiken von Wetterdaten, Temperaturdaten, Sonneneinstrahlungsdaten, Winddaten und Luftdruckdaten, sowie Zeitmerkmale wie Stunde des Tages, Tag der Woche, Monate und Jahreszeit. Diese Daten umfassen einen klassischen Ansatz in der Zeitreihenprognose, da sie den Zustand eines aktuellen Tages erfassen, für den eine Prognose erstellt wird.

Anschließend kann das Maschinenlernmodell in der Maschinenlernvorrichtung 25 (z. B. ein Gradient-Boosting-Regressor, XGBoost) trainiert werden. Die Hyperparameter des Maschinenlernmodells können beispielsweise mit Optuna optimiert werden. Optuna ist ein Python-basiertes Bibliothek für automatisierte Hyperparameter-Optimierung. Optuna ermöglicht eine Suche nach optimalen Hyperparametern für Maschinenlernmodelle, indem es verschiedene Algorithmen und Methoden zur Verfügung stellt. Optuna kann auch die Auswertung von Hyperparameter-Tuning-Experimenten erleichtern, indem es Ergebnisse visualisiert und speichert.

So kann in der Maschinenlernvorrichtung 25 ein Maschinenlernmodell für jede ENTSO-E Energieerzeugungsart und ein Maschinenlernmodell für den ENTSO-E Verbrauch trainiert werden. Dabei kann der mittlere quadratischen Fehler (RMSE), d. h., eine Standardmetrik in der Regression, während des Trainings verringert werden.

Die Maschinenlernmodelle können beispielsweise einmal pro Woche trainiert werden, um Veränderungen auf dem Strommarkt zu erfassen. Nach dem Training kann eine Qualitätsprüfung anhand eines Validierungsdatensatzes (historische Daten, die während des ersten Trainings zurückgehalten wurden) durchgeführt werden und die Leistung des Maschinenlernmodells kann mit einem Basismodell, das durch Maschinenlern-Experimente ständig aktualisiert wird (wie z. B. ein naives Modell "heute verhält sich ähnlich wie vor genau einer Woche"), geprüft werden. Die Leistung des Maschinenlernmodells im Vergleich zur Basismodellvorhersage kann als Qualitätsmaßstab (prozentuale Verbesserung gegenüber der Basismodellvorhersage) verwendet werden.

Bei der Vorhersage der nationalen Energieerzeugungs- und Verbrauchswerte für einen aktuellen Tag können dieselben Daten wie beim Training verwendet werden. Die Vorhersage kann ein zuletzt trainiertes Maschinenlernmodell über eine Modell-Versionierung verwenden.

Anschließend kann eine Qualitätsmetrik abgefragt werden (z. B. Leistung im Vergleich zur Basismodellvorhersage) und nach aufgezeichneter Qualitätsmetrik kann entweder eine Maschinenlern-Prognose oder die Basismodellvorhersage ausgegeben werden. So kann sichergestellt werden, dass eine bestmögliche Prognose für den aktuellen Tag erstellt wird, die von Faktoren außerhalb der Maschinenlern-Routine abhängt, z. B. von geplanten Abschaltungen von Kernkraftwerken.

Die Disaggregationsvorrichtung 26 kann dazu eingerichtet sein, eine Disaggregation der nationalen Energieerzeugungsdaten auszuführen. Um eine lokale Kohlenstoffdioxidemission zu schätzen, wird eine Schätzung des lokalen Energienetzverhaltens benötigt. Dazu kann ein lokales Energienetzverhalten in einem Top-Down-Verfahren geschätzt werden, bei dem die nationalen Zahlen (z. B. für Deutschland) auf lokale geografische Interessengebiete (z. B. Bayern) disaggregiert werden. Beispielsweise ist das Interessengebiet ein lokaler Bereich in einem Postleitzahlenbereich.

In der Top-Down-Disaggregation für die nationale Energieerzeugung wird festgelegt, dass die verfügbaren nationalen Zahlen ein Aggregat der tatsächlichen lokalen Erzeugungs-/Verbrauchsereignisse sind, die entsprechend gewichtet werden.

Im Falle der Elektrizitätserzeugung kann davon ausgegangen werden, dass die Verteilung der installierten Energieerzeugungskapazitäten (wie vom Markstammdatenregister bereitgestellt) eine angemessene Gewichtung in dem Top-Down-Disaggregationsansatz darstellt. Daher können unter Verwendung der Daten des Markstammdatenregisters und der Datenquelle 60, die über die dritte Kommunikationsvorrichtung 13 übermittelt werden, Aggregate der installierten Energieerzeugungskapazitäten auf lokaler Ebene für jede Art der Stromerzeugung erstellt werden.

Anschließend können Schätzungen auf lokaler Ebene für jede Stromerzeugungsart im Verhältnis zur lokal installierten Energieerzeugungskapazität als Anteil an der gesamten nationalen Energieerzeugungskapazität geschätzt werden.

Eine kapazitätsbasierte Gewichtung kann für erneuerbaren Energien, wie Solar und Wind, wie folgt angepasst werden: Es können prognostizierte Wetterbedingungen (Sonnenintensität, Luftdruck, Temperatur und/oder Windgeschwindigkeit) verwendet werden, um physikalische Bottom-up-Schätzungen für die Solar- und Windenergieproduktion auf lokaler Ebene zu berechnen. Die Bottom-up-Schätzungen können dann die installierte Kapazität in dem vorstehend beschriebenen Verfahren ersetzen: Die nationalen Zahlen zur Solar- und Windenergieproduktion können proportional zur lokalen Bottom-up-Schätzungen auf der Grundlage physikalischer Modelle für die Solar- und Windenergieproduktion disaggregiert werden.

Die Disaggregationsvorrichtung 26 kann ferner dazu eingerichtet sein, eine Disaggregation des nationalen Energieverbrauchs auszuführen. In dem Verfahren zur Schätzung des Stromverbrauchs auf lokaler Ebene können Verbrauchsprofile auf lokaler Ebene als Gewichtungsfaktoren berechnet werden.

Als Datenquelle 60 kann INFAS360 zur Schätzung von Haushaltsgrößen, Unternehmensarten und -zahlen sowie landwirtschaftlichen Betrieben an einem Standort verwendet werden. Diese Metriken gelten von der Straßenebene bis zur lokalen Ebene. Ferner können synthetische Standardlastprofile (SLP) für jeden Ort auf der Grundlage der von einem Netzbetreiber für sein Netzgebiet bereitgestellten SLPs erstellt werden. Die resultierenden SLPs auf lokaler Ebene können beispielsweise in 15-Minuten-Intervallen aufgelöst werden und sind spezifisch für Wochentage und Feiertage. Ähnlich wie bei der Disaggregation der Energieerzeugung kann die nationale Verbrauchsprognose dann proportional zu den synthetischen SLPs auf lokaler Ebene disaggregiert werden.

Ferner kann eine Umverteilung der lokalen Energieerzeugung auf Nachbarschaftsebene erfolgen. Nationale elektrische Versorgungsnetze sind in verschiedene Spannungsbereiche unterteilt, von der Niederspannung bis zur Hochspannung. Verschiedene Erzeuger, Verbraucher und Interessengruppen interagieren mit verschiedenen Spannungsebenen.

Verteilnetzbetreiber (DSO) arbeiten auf der Nieder- bis Hochspannungsebene des Netzes und haben daher die Aufgabe, die lokale Energieerzeugung und den Energieverbrauch im Gleichgewicht zu halten. Die Übertragungsnetzbetreiber (ÜNB) sind für die Hochspannungsebene des Netzes zuständig und stellen daher einen nationalen Pool von Strom der Hochspannungsebene als Reserve bereit, falls der lokale Verbrauch die Produktion auf DSO-Ebene übersteigt. Der DSO stellen Netzverbindungen zwischen den Anlagen in ihren jeweiligen Spannungsebenen her, so dass Strom, der in einem lokalen Bereich erzeugt wird, in benachbarte lokale Bereiche fließen kann.

Nach einer Ausführungsform dieser Offenbarung kann diese Netzverbindungen auf DSO-Ebene nachgebildet werden, indem ein Graphen-Modell erstellt wird, das alle lokalen Gebiete und ihre geografische Beziehung zueinander darstellt. Auf diese Weise kann der Strom auf DSO-Ebene von lokalen Gebieten mit Überschuss (lokale Gebiete, denen das vorstehend beschriebe Disaggregationsverfahren mehr Energieerzeugung als Energieverbrauch zuschreibt) auf lokale Gebiete mit Defizit (Gebiete, denen weniger Energieerzeugung als Energieverbrauch zugeschrieben wird) umverteilt werden.

Lokale Gebiete, die nach dieser Umverteilung immer noch defizitär sind, können aus einem nationalen Pool von Stromerzeugungsanlagen auf ÜNB-Ebene importieren (insbesondere von Anlagen, die an die höchste Spannungsebene im Markstammdatenregister angeschlossen sind - in der Regel Offshore-Windparks, Kernkraftwerke oder Kohlekraftwerke).

Mit der vorstehend beschrieben Technik kann jedes lokale Gebiet auf "Netto-Null" gebracht werden: Die Top-Down-Verbrauchsschätzung für ein bestimmtes Postleitzahlengebiet wird entweder durch die Top-Down-Energieerzeugungsschätzung, durch Energieimporte aus benachbarten Postleitzahlengebiete oder durch den Erzeugungspool auf ÜNB-Ebene mit der höchsten Spannung ausgeglichen.

Somit liegen ein eindeutiger Strommix für jedes Postleitzahlengebiet, der in eine Kohlenstoffdioxidintensität (g CO₂/kWh) proportional zu seinem Strommix umgerechnet werden kann, und eine Nachschlagetabelle für die Kohlenstoffdioxidintensität jeder beteiligten Stromquelle vor.

Mit der vorstehend beschriebenen Technik können aktuelle und zukünftige Schätzungen der Kohlenstoffdioxidintensität (g COz / kWh) für alle lokalen Gebiete in einem Land (z. B. Deutschland) und mit einer zeitlichen Auflösung in Echtzeit, in Aktualisierungen von maximal 30 Minuten, von maximal 20 Minuten, oder von maximal 15 Minuten, oder flexibel in Abhängigkeit von Strommarktgegebenheiten berechnet werden.

So kann die zweite Verarbeitungsvorrichtung 22 dazu eingerichtet ist, die zweiten Daten betreffend eine emittierte Kohlenstoffdioxidmenge, die einem Verbrauch einer zweiten elektrischen Energiemenge am Ort des Wasserstofferzeugers zugeordnet ist, in Echtzeit, in Aktualisierungen von maximal 30 Minuten, von maximal 20 Minuten, oder von maximal 15 Minuten, oder flexibel in Abhängigkeit von Strommarktgegebenheiten zu erzeugen.

Während der Wasserstofferzeugung können Zeitreihendaten mit Standort, Zeitstempel und der während der Wasserstofferzeugung verbrauchten Strommenge (kWh / g H₂) aufgezeichnet werden.

Um den COz-Ausstoß für eine vorgegebene Wasserstoffmenge zu berechnen, können diese Zeitreihen miteinander verbunden und die COz-Menge, die für die Bereitstellung der erforderlichen Strommenge an dem jeweiligen Standort emittiert wird, summiert werden.

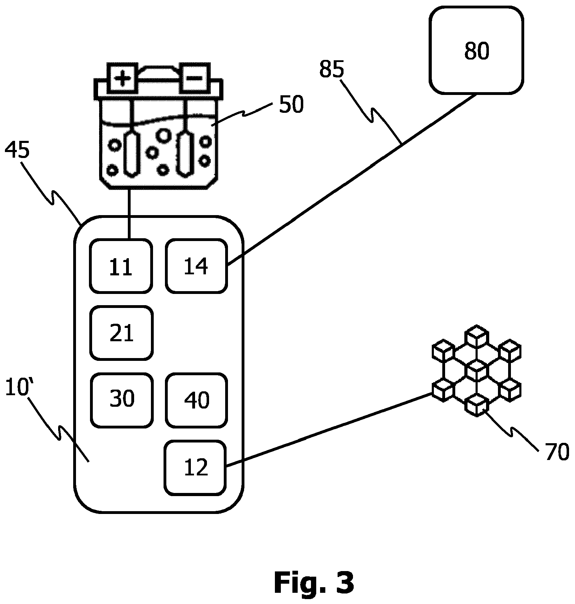

Die Fig. 3 zeigt eine schematische Darstellung eines zweiten Ausführungsbeispiels eines Systems zur Kohlenstoffdioxid-Nachverfolgung. Gleiche Bezugszeichen wie in den Ausführungsbeispielen der Figs. 1 und 2 betreffen gleiche Elemente, sodass auf eine erneute Erläuterung verzichtet wird.

Im Vergleich zu dem Ausführungsbeispiel der Fig. 1 umfasst die Vorrichtung zur Kohlenstoffdioxid-Nachverfolgung 10' keine zweite Verarbeitungsvorrichtung 22 und keine dritte Kommunikationsvorrichtung 13. Die Vorrichtung zur Kohlenstoffdioxid-Nachverfolgung 10' umfasst jedoch eine vierte Kommunikationsvorrichtung 14, die dazu eingerichtet ist, über eine gesicherte Netzwerkverbindung 85, die zweiten Daten betreffend die emittierte Kohlenstoffdioxidmenge, die einem Verbrauch einer zweiten elektrischen Energiemenge am Ort des Wasserstofferzeugers 50 zugeordnet ist, von einem Server 80 zu empfangen. In diesem Ausführungsbeispiel werden die zweiten Daten außerhalb der Vorrichtung zur Kohlenstoffdioxid-Nachverfolgung 10', beispielsweise in dem Server 80 erzeugt.

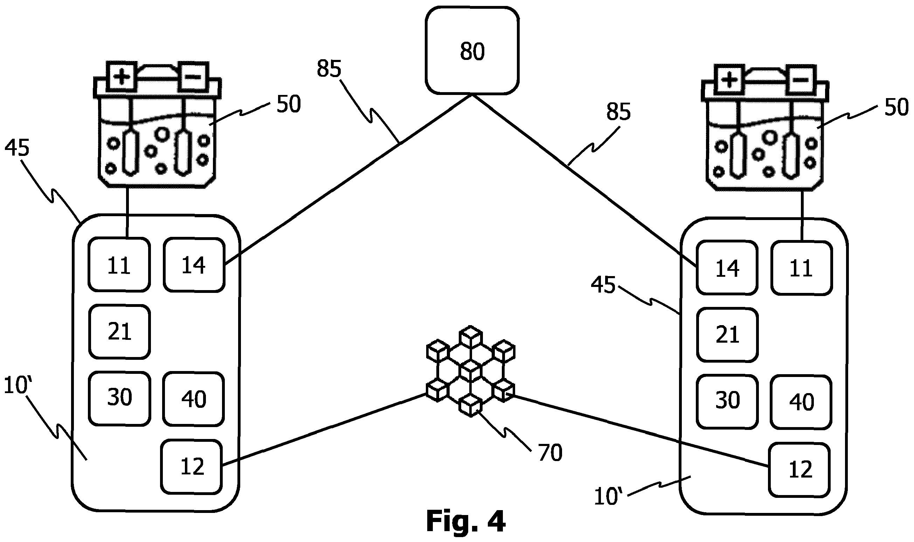

Die Fig. 4 zeigt eine schematische Darstellung eines dritten Ausführungsbeispiels eines Systems zur Kohlenstoffdioxid-Nachverfolgung. Dieses Ausführungsbeispiel baut auf das Ausführungsbeispiel der Fig. 3 auf, so dass gleiche Bezugszeichen gleiche Elemente betreffen und auf eine erneute Erläuterung verzichtet wird.

Das in der Fig. 4 gezeigte System zur Kohlenstoffdioxid-Nachverfolgung umfasst eine Vielzahl von Vorrichtungen zur Kohlenstoffdioxid-Nachverfolgung 10' mit jeweils einem zugeordneten Elektrolyseur 50. Jede der Vielzahl von Vorrichtungen zur Kohlenstoffdioxid-Nachverfolgung 10' empfängt über eine gesicherte Netzwerkverbindung 85 die zweiten Daten betreffend die emittierte Kohlenstoffdioxidmenge, die einem Verbrauch einer zweiten elektrischen Energiemenge am Ort des Elektrolyseurs 50 zugeordnet ist, von einem Server 80.

Diese Ausführungsform hat den Vorteil, dass alle Vorrichtungen 10' die zweiten Daten von dem selben Server 80 empfangen, so dass eine einfache Skalierung möglich ist und eine zweite Verarbeitungsvorrichtung 22, insbesondere die erforderliche Prozessorkapazität für eine zweite Verarbeitungsvorrichtung 22, vermieden werden kann.

Gemäß einer Weiterbildung der Ausführungsbeispiele der Figs. 3 und 4 ist jede Vorrichtung zur Kohlenstoffdioxid-Nachverfolgung 10' mit mehr als einem Elektrolyseur 50 verbunden. So kann jede Vorrichtung zur Kohlenstoffdioxid-Nachverfolgung 10' dazu eingerichtet sein, mehr als einen Elektrolyseur 50 zu steuern.

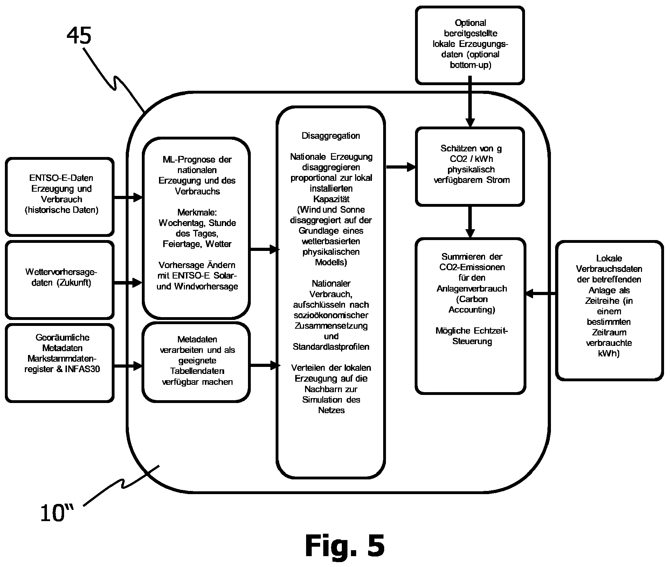

Die Fig. 5 zeigt eine schematische Darstellung eines zweiten Ausführungsbeispiels einer Vorrichtung zur Kohlenstoffdioxid-Nachverfolgung. Bei der Vorrichtung zur Kohlenstoffdioxid-Nachverfolgung 10" kann es sich um die in den Figs. 1 und 2 gezeigte Vorrichtung 10 oder um eine andere Vorrichtung handeln.

Als Eingangsdaten für die Vorrichtung 10" sind folgende Daten vorgesehen:
(1) Historische Erzeugungs- und Verbrauchsdaten von ÜNB und DSO;
(2) Wettervorhersagedaten (Zukunftsdaten);
(3) Georäumliche Metadaten, Markstammdatenregister & INFAS30; und/oder
(4) Netzwerktopologie-Daten, Live-Asset-Daten (Smart Meter, RLM, DERs, etc.)

Die Daten (1) und (2) gehen in ein Maschinenlern- (ML) Modul in der Vorrichtung 10", das Folgendes ausführt, ein: ML-Prognose der nationalen Energieerzeugung und des Energieverbrauchs. Merkmale: Wochentag, Stunde des Tages, Feiertage, Wetter. Die Vorhersage wird geändert mit ENTSO-E Solar- und Windvorhersagedaten.

Die Daten (3) gehen in ein Verarbeitungsmodul in der Vorrichtung 10", das folgende Schritte ausführt, ein: Metadaten verarbeiten und als geeignete Tabellendaten verfügbar machen.

Die Ausgangsdaten des ML-Moduls und des Verarbeitungsmoduls gehen in ein Disaggregationsmodul in der Vorrichtung 10", das folgende Schritte ausführt, ein: Nationale Energieerzeugung disaggregieren proportional zur lokal installierten Kapazität (Wind und Sonne disaggregiert auf der Grundlage eines wetterbasierten physikalischen Modells). Nationaler Energieverbrauch, aufgeschlüsselt nach sozioökonomischer Zusammensetzung und Standardlastprofilen erzeugen. Verteilen der lokalen Energieerzeugung auf die Nachbarn zur Simulation des Netzes.

Die Ausgangsdaten des Disaggregationsmoduls zusammen mit optional bereitgestellten lokale Energieerzeugungsdaten (ferner optional, bottom-up) gehen in ein Schätzungsmodul in der Vorrichtung 10", das Folgendes ausführt, ein: Schätzen von g COz / kWh physikalisch verfügbarem Strom.

Die Ausgangsdaten des Schätzungsmoduls zusammen mit von extern zugeführten lokalen Verbrauchsdaten einer betreffenden Anlage als Zeitreihe (in einem bestimmten Zeitraum verbrauchte kWh) gehen in ein Summationsmodul in der Vorrichtung 10", das Folgendes ausführt, ein: Summieren der COz-Emissionen für den Anlagenverbrauch (sogenanntes "Carbon Accounting").

Ferner ist durch die Vorrichtung 10" eine Echtzeit-Steuerung des Elektrolyseurs 50 (siehe Figs. 1 und 2) möglich.

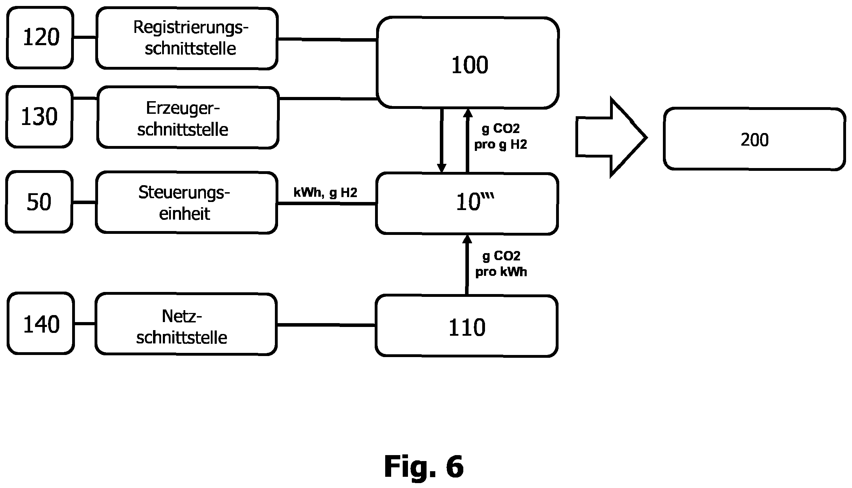

Die Fig. 6 zeigt eine schematische Darstellung eines Ausführungsbeispiels eines Systems zur Wasserstoffzertifizierung.

Das System umfasst eine Vorrichtung zur Kohlenstoffdioxid-Nachverfolgung 10‴ und eine Plattform 100. Bei der Vorrichtung kann es sich um eine in den vorstehend erläuterten Ausführungsbeispielen beschriebene Vorrichtung zur Kohlenstoffdioxid-Nachverfolgung 10, 10' oder 10", oder eine andere Vorrichtung handeln. Die Vorrichtung 10‴ kann als eine SoC-Komponente ausgebildet sein. Bei der Plattform 100 kann es sich um einen ersten Cloud-Server handeln, der mit der Vorrichtung zur Kohlenstoffdioxid-Nachverfolgung 10'" über das Internet in Kommunikationsverbindung steht.

Die Vorrichtung 10‴ empfängt von einem zweiten Cloud-Server 110 oder der Vorrichtung 10" Daten betreffend eine Menge an Kohlenstoffdioxid, die bei einer Erzeugung von elektrischer Energie freigesetzt wird (z. B. in den Einheiten g COz pro kWh). Der Cloud-Server 110 kann dazu ein Datenmodell und einem logischen Prozess umfassen, welche ihm erlauben, basierend auf von einem Energieerzeuger 140 über eine Netzschnittstelle empfangenen elektrischen Energiedaten die Daten betreffend eine Menge an Kohlenstoffdioxid, die bei einer Erzeugung von elektrischer Energie freigesetzt wird, zu bestimmen. Die Netzschnittstelle kann ferner Daten betreffend eine zeitliche Erzeugung und eine geographische Herkunft der von dem Energieerzeuger 140 erzeugten elektrischen Energie an den Cloud-Server 110 senden. Diese Daten können beispielsweise ENTSO-E Daten umfassen. Die Daten können mit Hilfe eines API über eine virtuelle Schnittstelle empfangen werden. Der Cloud-Server 110 verwendet diese Daten zum Bestimmen der Daten betreffend eine Menge an Kohlenstoffdioxid, die bei einer Erzeugung von elektrischer Energie freigesetzt wird. Diese Bestimmung kann insbesondere in Echtzeit erfolgen. Alternativ zu dem Cloud-Server 110 kann die Vorrichtung 10‴ auch dazu eingerichtet sein, die Daten betreffend die Menge an Kohlenstoffdioxid, die bei einer Erzeugung von elektrischer Energie freigesetzt wird, zu bestimmen. In diesem Fall kann der Cloud-Server 110 entfallen.

Über eine Steuerungseinheit empfängt die Vorrichtung 10‴ Daten betreffend einen Verbrauch von elektrischer Energie bei einer Erzeugung von Wasserstoff durch einen Elektrolyseur 50 (z. B. in den Einheiten kWh und g H₂). Diese Daten können in Echtzeit empfangen über eine physikalische Schnittstelle empfangen werden. Bei dem Elektrolyseur 50 kann es sich um einen der in den vorstehend beschriebenen Elektrolyseure 50 oder einen anderen Elektrolyseur handeln.

Die Vorrichtung 10‴ bestimmt Daten betreffend eine Menge an Kohlenstoffdioxid, die bei der Erzeugung von Wasserstoff freigesetzt wird, und sendet diese Daten an die Plattform 100 (z. B. in den Einheiten g COz pro g H₂), und empfängt zertifizierte Daten betreffend eine Menge an Kohlenstoffdioxid, die bei der Erzeugung von Wasserstoff freigesetzt wird, von der Plattform 100.

In Abhängigkeit von den bestimmten Daten und den zertifizierten Daten betreffend die Menge an Kohlenstoffdioxid, die bei der Erzeugung von Wasserstoff freigesetzt wird, erzeugt die Vorrichtung 10'" Steuerungsbefehle zum Steuern der Erzeugung von Wasserstoff durch den Elektrolyseur 50 und gibt diese an die Steuerungseinheit aus. Basierend auf den Steuerungsbefehlen kann die Steuerungseinheit den Elektrolyseur 50 steuern. Beispielsweise kann der Elektrolyseur 50 derart von der Steuerungseinheit gesteuert werden, dass dieser nur dann Wasserstoff erzeugt, wenn elektrischer Strom zur Verfügung steht, der ohne eine Emission von Kohlenstoffdioxid (beispielsweise Solarstrom) erzeugt wurde.

Die Vorrichtung 10‴ kann ferner dazu eingerichtet sein, eine "grüne" Wasserstoffproduktion durch den Elektrolyseur 50 zu überwachen und zu steuern. Des Weiteren kann die Vorrichtung 10‴ eine "grüne" Wasserstoffproduktion durch den Elektrolyseur 50 manipulationssicher zertifizieren. Somit wird nur die Vorrichtung 10'" als einziges, manipulationssicheres Gerät benötigt, wodurch eine Audit-Kette und eine zentrale Behörde vermieden werden können. Die Vorrichtung 10‴ sorgt ferner für eine zeitliche und geografische Korrelation der Daten und stellt sicher, dass die für die Steuerung der Wasserstoffproduktion durch den Elektrolyseur 50 verwendeten Daten nicht manipuliert werden.

Die Plattform 100 ist dazu eingerichtet ist, basierend auf den Daten betreffend die Menge an Kohlenstoffdioxid, die bei der Erzeugung von Wasserstoff freigesetzt wird, den von dem Elektrolyseur 50 erzeugten Wasserstoff hinsichtlich der Menge an Kohlenstoffdioxid, die bei der Erzeugung von Wasserstoff freigesetzt wird, zu zertifizieren. Die Plattform 100 kann die zertifizierten Daten an die Vorrichtung 10‴ und/oder einen Endnutzer 200 ausgeben.

Die Plattform 100 ist ferner dazu eingerichtet, von einem Wasserstoffbetreiber 130 über eine Erzeugerschnittstelle Daten betreffend Wasserstoff-Erzeugungspräferenzen zu erhalten. Die Daten können mit Hilfe eines API über eine virtuelle Schnittstelle empfangen werden. Die Plattform 100 ist des Weiteren dazu eingerichtet, von einer Marktplattform 120 über eine Registrierungsschnittstelle Daten betreffend Wasserstoff-Zertifizierungen zu erhalten. Insbesondere kann die Plattform 100 dazu eingerichtet sein, eine Massenbilanz der Wasserstofferzeugung zu verfolgen und zu berechnen. Die Daten können mit Hilfe eines API über eine virtuelle Schnittstelle empfangen werden.

Die Plattform 100 kann ferner eine Vorrichtung zum Ausführen eines Entscheidungsbaums umfassen, der regulatorische und konforme Ebenen, wie die Renewable Energy Directive II (RED II), sowie delegierte Rechtsakte übersichtlich darstellt. Die Plattform 100 kann auch Messungen auf der Grundlage von von der Vorrichtung 10‴ erhaltenen Daten (zertifizierte g CO2 / kWh H2-Produktion, Anlageninformationen, Standort, Produktionszeit, Energiekaufverträge (Power Purchase Agreements, PPA) usw.) vornehmen und mithilfe eines Entscheidungsbaums Klassifizierungen der Daten vornehmen. Ferner kann die Plattform 100 eine Überwachung registrierter Anlagen ausführen, einen Handel mit grüner Wasserstoffproduktion ermöglichen und eine Zertifizierung der grünen Wasserstoffproduktion unter Berücksichtigung bestehender Standards, wie REDII, TÜV Süd CMS usw. anhand eines Entscheidungsbaums (je nach Region und Zielgruppe) ausführen. Des Weiteren kann die Plattform 100 Energiekaufverträge und registrierte GOs zur Vermeidung von Doppelzählungen überwachen. Schließlich kann die Plattform 100 eine Automatisierung von Prozessen zur Auditierung und Zertifizierung von grünem Wasserstoffausführen.

Bei dem Endnutzer 200, der die zertifizierten Daten empfängt, kann es sich beispielsweise um einen Endnutzer im Mobilitätsbereich, einen Industrieanlagenbetreiber, eine Raffinerie, oder einen Endnutzer im Bereich Auditing, Handel, Lieferungen oder Netzeinspeisungen (CH₃, Vermischung mit Erdgas oder Wasserstoff-Pipeline) handeln.

Somit wird durch diese Ausführungsform eine automatisierte, manipulationssichere Lösung für die Produktion von grünem Wasserstoff und dessen Zertifizierung über einen netzgekoppelten Elektrolyseur im großen Maßstab vorschlagen. Insbesondere wird ein Zertifizierungsmodell verwendet, das eine Verfolgung des physischen Flusses unterstützt und eine zeitliche und geografische Korrelation zwischen der Erzeugung erneuerbarer Energie berücksichtigt. So kann das Modell "Massenbilanzierung" für die Zertifizierung von grünem Wasserstoff verwendet werden. Dieses Modell kann für Biokraftstoffe verwendet werden, bei denen es eine physische Verbindung zwischen der Produktion und dem Verbrauch von grüner Energie gibt (z. B. Container, Verarbeitungs- oder Logistikeinrichtungen, Standort usw.), um die physische Rückverfolgbarkeit nachzuweisen. Darüber hinaus kann das Modell "Massenbilanzierung" in vorhandenen Informationen in einem "Book and Claim" (Buchen und Fordern) -System integriert werden, wodurch das Vertrauen auf dem Wasserstoffmarkt zwischen Herstellern und Nutzern verbessert werden kann.

In dieser Ausführungsform wird ferner darauf abgezielt, eine Brücke zwischen Zertifikaten für grünen Wasserstoff und Zertifikaten für erneuerbaren Strom zu schlagen, und ein doppeltes Zählen der erneuerbaren Eigenschaften der primären Erzeugungsquelle zu vermeiden. Der vorgeschlagene Zertifizierungsprozess kann insbesondere aus zwei Schritten bestehen:
1. Die Vorrichtung 10"' wird genutzt, um auf alle Daten vor Ort zuzugreifen. Ein Verschlüsselungsmodul in der Vorrichtung 10‴ (in Fig. 6 nicht gezeigt) wird verwendet, um keinen Raum für eine Manipulation von Daten zu lassen. Die manipulationssichere grüne Zertifizierung zertifiziert grünen Wasserstoff und verwendet eine vernetzte Hardware-Lösung, die TPM, KI und On-Edge-Fähigkeiten kombiniert. Die Vorrichtung 10‴ verbindet sich mit dem Elektrolyseur 50, um den kombinierten Energie-Mix vor Ort zu bewerten und eine COz-basierte flexible Wasserstoffproduktion zu ermöglichen.
2. Die Plattform 100 stellt einen umfassenden und genauen Entscheidungsbaum bereit, der alle regulatorischen und konformen Schichten auf gut organisierte Weise darstellt. In einem letzten Schritt klassifiziert und zertifiziert die Plattform 100 die Daten mithilfe des Entscheidungsbaums und den Daten der Vorrichtung 10‴. Dadurch wird eine geografische und wohnortunabhängige Skalierung, unabhängig von der Anbindung an erneuerbare Energiequellen aufgrund von hyperlokalen und nachrüstbaren Anpassungen ermöglicht. Folglich bietet die Plattform 100 ein zeitlich und geografisch korreliertes Massenbilanz-Nachverfolgungs- und Zertifizierungssystem, das zuverlässig und sicher ist und für eine Automatisierung eines Wasserstofferzeugungs-Prüfprozesses verwendet werden kann.

Die oben beschriebenen Ausführungsformen der Figs. 1 bis 6 der vorliegenden Offenbarung liefern die folgenden Vorteile:
- Ermöglichung einer Bewertung der Kohlenstoffdioxidintensität in Echtzeit an jedem Ort im elektrischen Netz;
- Ermöglichung eines Abgleichs der physischen Stromerzeugung und des Verbrauchs im gesamten Netz in Echtzeit und auf der Grundlage einer örtlichen Nähe;
- Ermöglichung einer Steuerung dezentraler Verbraucher über intelligente Verträge unter Nutzung der zuvor genannten Erkenntnisse;
- Ermöglichung einer Bestimmung der physikalisch genauen Kohlenstoffdioxidemissionen anhand eines Echtzeitverbrauchs und der Kohlenstoffdioxidintensität;
- Ermöglichung einer Zertifizierung, dass nur kohlenstoffdioxidfreie und kohlenstoffdioxidarme Emissionen aus dem Verbrauch als "grün" gelten.

In den vorgestellten Beispielen und Ausführungsformen sind unterschiedliche Merkmale und Funktionen der vorliegenden Offenbarung getrennt voneinander sowie in bestimmten Kombinationen beschrieben worden. Es versteht sich jedoch, dass viele dieser Merkmale und Funktionen, wo dies nicht explizit ausgeschlossen ist, miteinander frei kombinierbar sind.

## Patentansprüche

1. Vorrichtung (10, 10', 10", 10‴) zur Kohlenstoffdioxid-Nachverfolgung, umfassend:
eine erste Kommunikationsvorrichtung (11), die dazu eingerichtet ist, von einem Wasserstofferzeuger (50) erste Daten betreffend eine von dem Wasserstofferzeuger (50) erzeugte Wasserstoffmenge und eine für die Erzeugung der Wasserstoffmenge eingesetzte erste elektrische Energiemenge zu empfangen;
eine erste Verarbeitungsvorrichtung (21), die dazu eingerichtet ist, zweite Daten betreffend eine emittierte Kohlenstoffdioxidmenge, die einem Verbrauch einer zweiten elektrischen Energiemenge am Ort des Wasserstofferzeugers (50) zugeordnet ist, zu erlangen, wobei
die erste Verarbeitungsvorrichtung (21) ferner dazu eingerichtet ist, basierend auf den ersten Daten und den zweiten Daten der von dem Wasserstofferzeuger (50) erzeugten Wasserstoffmenge eine Kohlenstoffdioxidemissionsmenge zuzuordnen;
ein vertrauenswürdiges Plattformmodul (30), das dazu eingerichtet ist, die der erzeugten Wasserstoffmenge zugeordnete Kohlenstoffdioxidemissionsmenge zu verschlüsseln und zu zertifizieren; und
eine zweite Kommunikationsvorrichtung (12), die dazu eingerichtet ist, die verschlüsselten und zertifizierten Daten zu senden.

2. Vorrichtung (10) nach Anspruch 1, ferner umfassend
eine dritte Kommunikationsvorrichtung (13), die dazu eingerichtet ist, aggregierte Daten, insbesondere elektrischen Messdaten, Geodaten, und/oder Produktionsmessdaten, zu empfangen und
eine zweite Verarbeitungsvorrichtung (22), die dazu eingerichtet ist, basierend auf den aggregierten Daten die zweiten Daten zu erzeugen, und die erzeugten zweiten Daten an die erste Verarbeitungsvorrichtung weiterzuleiten.

3. Vorrichtung (10) nach Anspruch 2, wobei
die aggregierte Daten, insbesondere die elektrischen Messdaten, Geodaten, und/oder Produktionsmessdaten, mindestens eine der folgenden Daten umfasst: Daten, die eine Menge an elektrischer Energie zeigen, die an einem bestimmten Ort erzeugt und verbraucht wird, lokale Wettervorhersagedaten als Zeitreihendaten, georäumliche Energienetz- und Verbraucher-Metadaten, Daten betreffend eine lokale Stromerzeugung, und lokale elektrische Energieverbrauchsdaten einer elektrischen Anlage als Zeitreihendaten.

4. Vorrichtung (10) nach Anspruch 2 oder 3, wobei
die zweite Verarbeitungsvorrichtung (22) eine Maschinenlernvorrichtung (25), eine Disaggregationsvorrichtung (26) und eine Rechenvorrichtung (27) umfasst, wobei
die Maschinenlernvorrichtung (25) dazu eingerichtet ist, basierend auf den elektrischen Messdaten und/oder Wetterdaten mit Hilfe eines Maschinenlernmodells Vorhersagedaten der elektrischen Messdaten zu berechnen,
die Disaggregationsvorrichtung (26) dazu eingerichtet ist, die Vorhersagedaten der elektrischen Messdaten mit Ortsdaten zu verknüpfen und
die Rechenvorrichtung (27) dazu eingerichtet ist, basierend auf den Daten der Disaggregationsvorrichtung (26), die zweiten Daten zu berechnen.

5. Vorrichtung (10) nach Anspruch 4, wobei
die Disaggregationsvorrichtung (26) dazu eingerichtet ist, elektrische Versorgungsnetzdaten eines nationalen elektrischen Versorgungsnetzes auf ein lokales geografisches Gebiet zu disaggregieren.

6. Vorrichtung (10) nach Anspruch 4 oder 5, wobei
die Rechenvorrichtung (27) dazu eingerichtet ist, eine Schätzung der zweiten Daten auf lokaler Ebene, insbesondere Postleitzahlenebene, für jede Energieerzeugungsart im Verhältnis zu einer lokal installierten Energieerzeugungskapazität als Anteil an einer gesamten nationalen Energieerzeugungskapazität zu berechnen.

7. Vorrichtung (10) nach einem der Ansprüche 2 bis 6, wobei
die zweite Verarbeitungsvorrichtung (22) dazu eingerichtet ist, die zweiten Daten in Echtzeit, in Aktualisierungen von maximal 30 Minuten, von maximal 20 Minuten, oder von maximal 15 Minuten, oder flexibel in Abhängigkeit von Strommarktgegebenheiten zu erzeugen.

8. Vorrichtung (10', 10") nach Anspruch 1, ferner umfassend
eine vierte Kommunikationsvorrichtung (14), die dazu eingerichtet ist, über eine gesicherte Netzwerkverbindung (85), die zweiten Daten von einem Server (80) zu empfangen.

9. Vorrichtung (10, 10', 10", 10‴) nach einem der vorhergehenden Ansprüche, ferner umfassend
eine Steuerungsvorrichtung (40), die dazu eingerichtet ist, basierend auf der der erzeugten Wasserstoffmenge zugeordneten Kohlenstoffdioxidemissionsmenge Steuerungsbefehle für den Wasserstofferzeuger (50) zu erzeugen und die Steuerungsbefehle über die erste Kommunikationsvorrichtung (11) an den Wasserstofferzeuger (50) zu senden.

10. Vorrichtung (10, 10', 10", 10"') nach Anspruch 9, wobei die Steuerungsvorrichtung (40) dazu eingerichtet ist, Steuerungsbefehle zu erzeugen, die den Wasserstofferzeuger (50) veranlassen, wenn eine emittierte Kohlenstoffdioxidmenge, die einem Verbrauch einer elektrischen Energiemenge am Ort des Wasserstofferzeugers (50) zugeordnet ist, einen Schwellenwert übersteigt, keine oder eine reduzierte Menge an Wasserstoff zu erzeugen.

11. Vorrichtung (10, 10', 10", 10‴) nach einem der vorhergehenden Ansprüche, wobei
die zweite Kommunikationsvorrichtung (12) dazu eingerichtet ist, die verschlüsselten und zertifizierten Daten an ein Blockchain-Netzwerk (70) zu senden.

12. Vorrichtung (10, 10', 10", 10‴) nach einem der vorhergehenden Ansprüche, ferner umfassend
ein Gehäuse (45), wobei das Gehäuse (45) verplombt ist und/oder ein Öffnungsmechanismus des Gehäuses (45) mit Signallack versehen ist.

13. System zur Kohlenstoffdioxid-Nachverfolgung, umfassend
eine Vorrichtung (10, 10', 10", 10‴) nach einem der vorhergehenden Ansprüche und einen Wasserstofferzeuger (50); oder
eine Vielzahl von Vorrichtungen (10, 10', 10", 10‴) nach einem der vorhergehenden Ansprüche mit jeweils einem oder einer Vielzahl von zugehörigen Wasserstofferzeuger(n) (50).

14. System nach Anspruch 13, ferner umfassend
einen Server (80), der dazu eingerichtet ist, über eine gesicherte Netzwerkverbindung, die zweiten Daten and die vierte Kommunikationsvorrichtung (14) zu senden.

15. System zur Kohlenstoffdioxidemissionszertifizierung, umfassend
ein System nach Anspruch 13 oder 14, und
ein Blockchain-Netzwerk. (70).

16. System zur Wasserstoffzertifizierung, umfassend
eine Vorrichtung (10‴) nach einem der Ansprüche 1 bis 12 und
eine Plattform (100), die mit der Vorrichtung (10‴) in Kommunikationsverbindung steht, wobei
die Vorrichtung (10‴) dazu eingerichtet ist, Daten betreffend eine Menge an Kohlenstoffdioxid, die bei einer Erzeugung von elektrischer Energie freigesetzt wird, zu erhalten, Daten betreffend einen Verbrauch von elektrischer Energie bei einer Erzeugung von Wasserstoff durch einen Wasserstofferzeuger (50) zu empfangen, Daten betreffend eine Menge an Kohlenstoffdioxid, die bei der Erzeugung von Wasserstoff freigesetzt wird, zu bestimmen und an die Plattform (100) zu senden, zertifizierte Daten betreffend eine Menge an Kohlenstoffdioxid, die bei der Erzeugung von Wasserstoff freigesetzt wird, von der Plattform (100) zu empfangen, und in Abhängigkeit von den bestimmten Daten und den zertifizierten Daten betreffend eine Menge an Kohlenstoffdioxid, die bei der Erzeugung von Wasserstoff freigesetzt wird, Steuerungsbefehle zum Steuern der Erzeugung von Wasserstoff durch den Wasserstofferzeuger (50) auszugeben, und
die Plattform (100) dazu eingerichtet ist, basierend auf den Daten betreffend die Menge an Kohlenstoffdioxid, die bei der Erzeugung von Wasserstoff freigesetzt wird, den durch den Wasserstofferzeuger (50) erzeugten Wasserstoff hinsichtlich der Menge an Kohlenstoffdioxid, die bei der Erzeugung von Wasserstoff freigesetzt wird, zu zertifizieren.
